# EUROPÄISCHE PATENTANMELDUNG

(11) **EP 3 031 750 A1**
(43) Veröffentlichungstag der Anmeldung: **15.06.2016**
(21) Anmeldenummer: 14197489.9
(22) Anmeldetag: 11.12.2014
(51) Int. Cl.: B65D 85/804

(54) **Getränkekapsel, Getränkezubereitungssystem und Verfahren zum Identifzieren einer Getränkekapsel**

(71) Anmelder: Qbo Coffee GmbH, 8304 Wallisellen (CH)
(72) Erfinder: Aschwanden, Ivo, 8003 Zürich (CH)
(74) Vertreter: Frei Patent Attorneys

(57) **Zusammenfassung**

Die vorliegende Erfindung betrifft eine Kapsel (10) zur Getränkezubereitung in einer Brühmaschine (20), wobei die Kapsel einen mit einem Extraktionsgut gefüllten Kapselbecher (11) mit einem im Wesentlichen quadratischen Boden (12) und einen den Kapselbecher (11) verschliessenden Kapseldeckel (16) aufweist, gekennzeichnet durch zumindest einen ersten optisch lesbaren Code (50) am Boden (12) des Kapselbechers (11), welcher eine zweidimensionale Anordnung mehrerer erster Codeelemente (52, 53) aufweist, und ferner gekennzeichnet durch zumindest einen zweiten optisch lesbaren Code (150) am Boden (12) des Kapselbechers (11), welcher eine zweidimensionale Anordnung mehrerer zweiter Codeelemente (52') aufweist, die bezogen auf einen Mittelpunkt (55) des ersten Codes (50) radial ausserhalb des ersten Codes (50) liegen. Die Erfindung betrifft ferner ein die Kapsel (10) und eine zugehörige Brühmaschine (20) aufweisendes System sowie ein Verfahren zum Identifizieren einer solchen Kapsel (10).

## Beschreibung

Die vorliegende Erfindung betrifft eine Getränkekapsel zum Herstellen eines Getränks aus einer in der Kapsel enthaltenen Getränkezutat. Insbesondere betrifft sie eine Getränkekapsel, welche einen Code umfasst, der Informationen über die in der Kapsel enthaltene Getränkezutat oder andere Eigenschaften der Kapsel enthalten kann, und von einer Brühmaschine decodiert werden kann. Die Erfindung betrifft ausserdem ein Getränkezubereitungssystem aus einer Getränkekapsel und einer Brühmaschine, und ein Verfahren zum Identifizieren einer Getränkekapsel in einer Brühmaschine.

Konkret betrifft die vorliegende Erfindung eine Kapsel zur Getränkezubereitung in einer Brühmaschine, welche einen mit einer Getränkezutat gefüllten Kapselbecher mit einem im Wesentlichen quadratischen Boden, und einen auf dem Kapselbecher befestigten Kapseldeckel umfasst. Die Kapsel insgesamt ist dabei vorzugsweise im Wesentlichen würfelförmig, d.h. die seitlichen Wände der Kapsel, welche den Boden und den Deckel verbinden, haben im Wesentlichen die gleiche quadratische Form wie der Boden und der Deckel. Die seitliche Kantenlänge kann aber auch grösser oder kleiner sind, so dass dann eine im Wesentlichen quaderförmige Kapsel entsteht.

Gattungsgemässe Kapseln sind aus der EP 2419352 A1, sowie den noch unveröffentlichten Europäischen Patentanmeldungen EP13199514, EP13199515 und EP 13199517 bekannt, auf die hiermit Bezug genommen wird.

Einzelportionskapseln zum Zubereiten von Getränken, insbesondere von Heissgetränken wie Kaffee, Tee, Schokoladen- oder Milchgetränken, erfreuen sich stetig wachsender Beliebtheit. Typischerweise enthalten solche Getränkekapseln ein Extraktionsgut, wie beispielsweise gerösteten und gemahlenen Kaffee oder Tee, oder eine oder mehrere lösliche Getränkezutaten wie beispielsweise Instantkaffee, Milchpulver oder Kakaopulver. Neben diesen bekannten Zutaten soll der Begriff "Extraktionsgut" im Rahmen der vorliegenden Erfindung auch ein Reinigungsmittel umfassen, welches zur Reinigung einer Brühmaschine genutzt werden kann.

Es ist bereits bekannt, Getränkekapseln mit einem Code zu versehen, der von der Brühmaschine ausgelesen werden kann, und beispielsweise Information über den Kapseltyp, über die Getränkezutat, oder über für die betreffende Kapsel optimale Brühparameter enthält. Bekannt sind beispielsweise unter anderem aus der EP2168073 Kapseln, auf denen auf einer Deckelmembran ein Barcode aufgebracht ist, oder aus der WO2011/089048A1 Kapseln, auf denen ebenfalls auf einer Deckelmembran ein QR-Code aufgedruckt ist.

Es ist zwar relativ einfach, einen Code auf einer Deckelmembran bzw. einem Kapseldeckel aufzubringen. Die Deckel werden häufig ohnehin bedruckt und können mit nur wenig zusätzlichem Aufwand mit einem Code versehen werden. Schwierig ist allerdings das Auslesen des Codes auf dem Deckel, insbesondere bei horizontaler Anordnung des Kapsel in einer Brühmaschine, bei denen meistens das Wasser durch den Kapselboden eingeleitet wird, und das Brühprodukt durch die Deckelmembran bzw. den Deckel austritt und in die Tasse geleitet wird. Eine in der Brühkammer auf der Seite des Kapseldeckels vorgesehene Detektionseinheit ist somit immer einer Verschmutzung durch Getränkerückstände, Spritzer, etc. ausgesetzt. Zudem möchte man typischerweise den Weg zwischen dem Austritt des Getränks aus der Kapsel und der Tasse möglichst kurz halten, und es ist daher eine Herausforderung, die Detektionseinheit überhaupt unterzubringen. Die in der EP2168073 und in der WO2011/089048A1 beschriebenen Lösungen eignen sich daher nicht für Kapseln, die in sog. horizontalen Brühmaschinen, d.h. in horizontaler Ausrichtung gebrüht werden.

Weitere Nachteile des Standes der Technik liegen in den verwendeten Codes selbst.

Die Menge und Art an Informationen, die in einem Barcode codiert werden kann, ist stark beschränkt.

QR-Codes und ähnliche bekannte 2-D-Codes können zwar sehr viel mehr Information enthalten und codieren, eignen sich aufgrund ihrer Struktur aber nur bedingt für die Anwendung auf Getränkekapseln, wenn diese in Brühmaschinen ausgelesen werden sollen. Ein häufiges Problem beim Auslesen eines auf einer Kapsel vorgesehenen Codes in einer Brühmaschine sind nämlich Verschmutzungen durch Getränkespritzer, Kalkablagerungen und Ähnliches, welche sowohl auf der Ausleseoptik, als auch je nach Lagerung der Kapseln auf der Kapsel selbst auftreten können.

Gängige optische 2-D-Codes weisen alle sogenannte Finder Patterns auf, deren erfolgreiche Erkennung zwingend notwendig ist, um den Code auslesen zu können. Wenn sich nun gerade im Bereich des Finder Patterns eine lokale Verschmutzung befindet, ist der gesamte Code unlesbar. Das führt dann je nach Programmierung der Maschine zu einer Fehlermeldung, die ein Entnehmen der nicht lesbaren Kapsel erfordert. Falls sich das Problem nicht durch eine Reinigung der Ausleseoptik oder der Kapsel lösen lässt, muss die - an sich geniessbare - Kapsel eventuell sogar verworfen werden, was selbstverständlich aus Kundensicht nicht akzeptabel ist. Ferner sind die Anforderungen an die Kameraoptik und die Rechenleistung des Prozessors der Detektionseinheit bei den bekannten 2-D-Codes in einer Brühmaschine mit vertretbarem Kosten- und Platzaufwand nur schwer umzusetzen.

Aufgabe der vorliegenden Erfindung ist es daher, eine Kapsel der eingangs genannten Gattung zur Verfügung zu stellen, welche mit einem Code versehen ist, der eine ausreichende Menge an Informationen speichern kann, und in der Brühmaschine schnell und mit extrem hoher Erfolgsquote gelesen werden kann. Weiter ist es Aufgabe der Erfindung, ein System aus einer solchen Kapsel und einer Brühmaschine sowie ein Verfahren zur Identifikation einer solchen Kapsel bereit zu stellen, welche die genannten Nachteile überwinden.

Diese Aufgabe wird gelöst durch die in den Patentansprüchen definierte Kapsel zur Getränkezubereitung, durch ein System zum Zubereiten eines Getränks aus einer solchen Kapsel sowie durch ein Verfahren zum Identifizieren einer derartigen Kapsel in einer Brühmaschine.

Gemäss der Erfindung ist zumindest ein erster optisch lesbarer bzw. visuell erkennbarer Code am Boden des Kapselbechers ausgebildet bzw. hieran vorgesehen. Der erste Code weist eine zweidimensionale Anordnung mehrerer erster Codeelemente auf. Ferner ist ein zweiter optisch lesbarer bzw. visuell erkennbarer Code am Boden des Kapselbechers vorgesehen. Auch dieser weist eine zweidimensionale Anordnung mehrerer zweiter Codeelemente auf. Die zweiten Codeelemente, mithin der zweite Code, liegt, bezogen auf einen Mittelpunkt des ersten Codes radial ausserhalb des ersten Codes. Der erste Code befindet sich vorzugsweise im Zentrum des Bodens des Kapselbechers.

Die erste und der zweite Code repräsentieren dabei unterschiedliche Code Level. Der am Kapselboden aufgebrachte Code kann insbesondere zwei- oder mehrstufig ausgestaltet sein, wobei der erste Code eine erste Codestufe oder ersten Codelevel und wobei der zweite Code eine zweite Codestufe oder einen zweiten Codelevel definiert.

Typischerweise fällt der Mittelpunkt des zweidimensionalen ersten Codes mit dem Mittelpunkt des Bodens des Kapselbechers zusammen. Der erste Code weist typischerweise eine quadratische oder rechteckige Kontur mit Seitenrändern auf, die parallel zu den Seitenrändern des Bodens des Kapselbechers verlaufen. Alternativ ist aber auch eine gedrehte Ausrichtung des ersten Codes relativ zur Geometrie des Bodens des Kapselbechers denkbar. Indem der zweite Code ausserhalb des ersten Codes liegt, ist allein schon durch die Lage der Codes eine Unterscheidung derselben möglich. Erster und zweiter Code können ferner räumlich voneinander getrennt sein. Es ist denkbar, dass sich zwischen dem ersten und dem zweiten Code eine codefreie Zone am Boden des Kapselbechers erstreckt. Dadurch, dass die zweiten Codeelemente bzw. der hiervon gebildete zweite Code radial ausserhalb des ersten Codes bzw. radial ausserhalb sämtlicher ersten Codeelemente liegt, befindet sich erster und zweiter Code in verschiedenen Abständen zum Mittelpunkt des ersten Codes bzw. zum Mittelpunkt des Bodens des Kapselbechers.

Es ist insbesondere vorgesehen, dass der Kapselbecher mit seinem Boden in insgesamt vier verschiedenen Orientierungen oder Ausrichtungen in der Brühmaschine anordenbar ist. Die unterschiedlichen Ausrichtungen der Kapsel ergeben sich durch eine Drehung der Kapsel in Bezug auf eine durch den Boden verlaufende Mittelpunktsachse, die sich typischerweise senkrecht zur Ebene des Bodens als auch senkrecht zur Ebene des Kapseldeckels erstreckt.

Den Code auf dem Boden der Kapsel, und nicht auf einem Deckel oder wie in dem oben zitierten Stand der Technik beschrieben auf einer Deckelmembran anzubringen hat verschiedene Vorteile. So steht der Kapseldeckel für eine dekorative Bedruckung, eine für den Benutzer lesbare Information, oder Ähnliches zur Verfügung, und das Design des Deckels wird nicht durch einen zusätzlichen Code beeinträchtigt. Ausserdem kann eine Detektionseinheit in einer horizontalen Brühmaschine der Brühkammer vorgelagert, d.h. stromaufwärts der Brühkammer untergebracht werden, wo weniger Verschmutzung durch Getränkespritzer u.ä. droht, und der Einbauraum weniger kritisch ist.

Für das optische Auslesen bzw. visuelle Erkennen des Codes am Boden des Kapselbechers ist aufseiten der Brühmaschine eine Detektionseinheit mit einer Kamera vorgesehen. Befindet sich die Kapsel in einer Leseposition innerhalb der Brühmaschine, fällt die optische Achse des Kamerasystems von Vorteil mit dem Mittelpunkt des ersten Codes zusammen. Auf diese Art und Weise kann der erste Code in einer Bildmitte eines von der Detektionseinheit aufgenommenen Bildes abgebildet werden. Der zweite Code befindet sich dann radial ausserhalb der Bildmitte, etwa in einem Randbereich eines aufgenommenen Codebildes.

Die Detektionseinheit, insbesondere deren Kamera sowie deren Bildaufnahmesensor sind von Vorteil besonders preiswert und dementsprechend leistungsarm ausgestaltet. Insoweit ist denkbar, dass der radial aussenliegende zweite Code mit geringerer Bildqualität als der radial innenliegende erste Code aufgenommen bzw. auslesbar oder detektierbar ist. Auch kann durch die radial voneinander beabstandete Positionierung erster und zweiter Codeelemente bzw. hiervon gebildeter erster und zweiter Codes unterschiedliche Codeinformationen im oder am Boden des Kapselbechers hinterlegt werden. Insbesondere kann der zweite Code als optionaler Code ausgestaltet sein, welcher nur von bestimmten Brühmaschinen erkennbar und verarbeitbar ist.

Nach einer weiteren Ausgestaltung umschliesst der zweite Code den ersten Code in Umfangsrichtung vollständig. Der zweite Code bzw. dessen Codeelemente können sich beispielsweise ringförmig um die Aussenränder des ersten Codes erstrecken. Es ist dabei ferner denkbar, dass der erste Code und der zweite Code insgesamt eine quadratische oder rechteckige Struktur bzw. Aussengeometrie aufweisen. Der erste Code kann hierbei vollständig innerhalb des zweiten Codes liegen. Es ist hierbei jedoch eine überdeckungsfreie Anordnung erster und zweiter Codes bzw. von ersten und zweiten Codeelementen vorgesehen. Der erste Code befindet sich innerhalb einer zusammenhängenden Fläche. Auch der zweite Code kann innerhalb einer zusammenhängenden und durchgehenden Fläche liegen, die sich ausserhalb des ersten Codes erstreckt.

Das vollständige Umschliessen des ersten Codes durch den zweiten Code ist für die insgesamt vier möglichen Ausrichtungen des Codes innerhalb der Brühmaschine von Vorteil. Sollte, aus welchen Gründen auch immer, die optische Achse der Detektionseinheit einmal nicht exakt mit dem Mittelpunkt des ersten Codes zusammenfallen, so ergeben sich in jeder der vier unterschiedlichen möglichen Ausrichtungen des Codes jedoch annähernd identische oder ähnliche Abbildungen auf der Detektionseinheit.

Es ist ferner denkbar, dass ein geometrischer Mittelpunkt des ersten Codes mit einem geometrischen Mittelpunkt des zweiten Codes zusammenfällt. Ferner können die Mittelpunkte der Codes auch mit dem geometrischen Mittelpunkt des Bodens des Kapselbechers zusammenfallen, bzw. im Wesentlichen überdeckend zu liegen kommen.

Nach einer weiteren Ausgestaltung sind die ersten Codeelemente und die zweiten Codeelemente im Wesentlichen identisch. Die Codes können allein durch ihre Lage etwa in Bezug auf den Mittelpunkt des ersten Codes bzw. in Bezug auf eine relative Positionierung zum Rand des Bodens unterscheidbar sein.

Die Verwendung von identischen ersten und zweiten Codeelementen ist für das Aufbringen des Codes als auch für die der Detektionseinheit nachgeschaltete Bildauswertung vorteilhaft. Die Bildauswertung muss für das Erkennen und Auslesen des Codes lediglich ein einziges für die ersten und zweiten Codeelemente charakteristisches Muster erkennen und identifizieren. In hardwaretechnischer und softwaretechnischer Hinsicht ermöglicht dies die Verwendung besonders kostengünstiger, robuster und langlebiger Hardwarekomponenten. Die Erkennung und Verwendung eines einzigen Codeelements für den ersten und den zweiten Code ist ferner für eine zuverlässige, schnelle und fehlerfreie softwaremässige Erkennung von Codeelementen von Vorteil.

Die räumlich voneinander getrennte Anordnung erster und zweiter Codes ermöglicht ein selektives Auslesen erster und zweiter Codes. Die räumlich getrennte und radial nach aussen gestaffelte Anordnung unterschiedlicher Codes kann ferner für verschiedene Brühmaschinen Verwendung finden. Je nach Ausstattung der Brühmaschine ist der zweite Code verwendbar oder ignorierbar. Optionale Zusatzinformationen zur Kapsel und ihrem Extraktionsgut können beispielsweise über den zweiten Code nur einer bestimmten Gattung oder Ausstattungsvariante von Brühmaschinen zugänglich gemacht werden. Dies kann Kaufanreize der Endverbraucher für derartige Maschinen fördern.

Für besonders preiswerte Brühmaschinen kann es hingegen ausreichend sein, lediglich den ersten Code auszulesen. Derartige Maschinen können insoweit auch mit einer dementsprechend abgespeckten Detektionseinheit und Bildauswertung versehen werden, die lediglich den im zentralen Bereich des Bodens des Kapselbechers befindlichen ersten Code visuell erfassen bzw. decodieren.

Nach einer weiteren Ausgestaltung weist zumindest einer von erstem und zweitem Code jeweils eine Anzahl im Wesentlichen identischer und im Wesentlichen identisch ausgerichteter Codeelemente auf. Insbesondere kann der erste Code aus einer Anzahl im Wesentlichen identischer und im Wesentlichen identisch ausgerichteter Codeelemente bestehen. Gleiches ist für den zweiten Code denkbar. Auch der zweite Code kann, für sich betrachtet, aus einer Anzahl im Wesentlichen identischer und im Wesentlichen identisch ausgerichteter zweiter Codeelemente bestehen.

Erste und zweite Codeelemente können im Wesentlichen identisch sein, sodass für die visuelle Erkennung erster und zweiter Codes ein und dieselbe Bilderkennungssoftware oder Bildauswertesoftware verwendbar ist.

Nach einer weiteren Ausgestaltung ist jedoch vorgesehen, dass die ersten Codeelemente im Vergleich zu den zweiten Codeelementen unterschiedlich ausgerichtet sind. Es ist dabei insbesondere vorgesehen, dass sämtliche ersten Codeelemente im Wesentlichen identisch ausgebildet und im Wesentlichen identisch ausgerichtet sind. Auch die zweiten Codeelemente sind von Vorteil im Wesentlichen identisch ausgebildet als auch im Wesentlichen identisch ausgerichtet. Die Ausrichtung sämtlicher erster Codeelemente kann sich jedoch von der Ausrichtung der zweiten Codeelemente unterscheiden. Auf diese Art und Weise sind erste und zweite Codeelemente allein durch ihre Ausrichtung zueinander voneinander unterscheidbar. Der erste und der zweite Code können auf diese Art und Weise direkt im aufgenommenen Bild des Bodens des Kapselbechers erkannt und separat ausgewertet werden.

Nach einer Weiterbildung ist ferner vorgesehen, dass der erste Code und der zweite Code unterschiedliche erste und zweite Codeinformationen enthalten. Es ist insbesondere vorgesehen, dass der erste Code Informationen bezüglich des Brühvorgangs enthält. Beispielsweise umfasst der erste Code eine Brühprogrammnummer sowie eine eindeutige Kennzeichnung der Kapsel bzw. ihres darin enthaltenen Extraktionsguts. Es ist ferner denkbar, dass der erste Code auch direkt die für den Brühvorgang relevanten Informationen, so etwa diverse Brühparameter, wie zum Beispiel eine Wassermenge, eine Wassertemperatur, einen Wasserdruck, eine Brühzeit oder eine Präinfusionszeit enthält. Der zweite Code kann weitere Zusatzinformationen zur Kapsel bzw. zum Extraktionsgut enthalten. Der zweite Code enthält beispielsweise solche Informationen, wie ein Mindesthaltbarkeitsdatum, einen Herstellungs- oder Produktionsort sowie eine Chargennummer.

Dadurch, dass der zweite Code radial ausserhalb des ersten Codes liegt und eine zusammenhängende Codefläche aufweist, hat der zweite Code einen grösseren Aussenumfang als der erste Code. Für ein bestimmungsgemässes Auslesen und Erkennen des zweiten Codes kann es erforderlich sein, die Brühmaschine bzw. ihre Detektionseinheit mit einem grösseren Bildsensor auszustatten. Je nach Konfiguration der Brühmaschine kann diese beispielsweise entweder exklusiv nur zum Auslesen des ersten Codes und lediglich optional auch zum Auslesen des zweiten Codes ausgestaltet sein.

Nach einer weiteren Ausgestaltung weist zumindest einer von erstem und zweitem Code eine rechteckige oder quadratische Aussenkontur auf. Es ist insbesondere denkbar, dass beide, erster und zweiter Code, jeweils eine quadratische oder jeweils eine rechteckige Aussenkontur aufweisen.

Es kann ferner vorgesehen sein, dass sich die Aussenränder von zumindest einem von erstem und zweiten Code im Wesentlichen parallel zu den Aussenrändern des Bodens des Kapselbechers erstrecken. Ferner kann vorgesehen sein, dass Linienabschnitte erster oder zweiter Codeelemente parallel zu den Aussenrändern des Codes bzw. parallel zu den Aussenrändern des Bodens des Kapselbechers verlaufen. Dies trägt zu einer besonders deutlichen Abbildung der Codeelemente auf der Pixelebene der Detektionseinheit bei.

Nach einer weiteren Ausgestaltung ist vorgesehen, dass die Codeelemente zumindest eines von erstem und zweiten Code eine Information enthalten, aus welcher eine von mehreren möglichen Ausrichtungen des Codes oder beider Codes in der Ebene des Bodens eindeutig ableitbar ist. Die Codeelemente weisen typischerweise selbst eine zweidimensionale Gestalt und eine derartige geometrische Kontur auf, die es erlaubt, die Ausrichtung bzw. Orientierung der Codeelemente in der Ebene des Bodens zu bestimmen. Die Ausrichtung einzelner Codeelemente korreliert hierbei mit der Ausrichtung des von den Codeelementen jeweils gebildeten Codes. Indem vorzugweise jedes Codeelement eine definierte Ausrichtung zur Ausrichtung des Codes aufweist, kann auf der Basis einer Bestimmung der Orientierung eines beliebigen Codeelements eine von mehreren möglichen Ausrichtungen des Codes zuverlässig und eindeutig bestimmt werden. Die Information über die Orientierung des Codes kann insbesondere in jedem Codeelement enthalten sein, sodass zumindest die Ausrichtung des Codes unabhängig vom eigentlichen Auslesen und Decodieren des Codes ohne Weiteres erkennbar ist.

Die gattungsgemässe Kapsel kann aufgrund ihrer Symmetrie und ihres quadratischen Querschnittes in vier verschiedenen Positionen in die Brühmaschine eingeworfen oder eingelegt werden. Es gibt also vier jeweils um 90° gedrehte Orientierungen für die Kapsel, und damit auch für den auf dem Boden der Kapsel vorhandenen Code. Dadurch, dass die einzelnen Codeelemente die Information über die Orientierung des Codes tragen, kann bereits durch das Erkennen und Identifizieren eines einzelnen und beliebigen Codeelements eine von mehreren möglichen Orientierungen des Codes eindeutig bestimmt werden. Die Orientierung des Codes kann so anhand aller festgestellten Orientierungen von Code Elemente über einen Mehrheitsentscheid robust bestimmt werden. Wird die Anordnung der Code Elemente derart gewählt, dass sie sich auf einer gedachten dem Code zugrundeliegenden Gitterstruktur befinden, können zudem Anhand einer beliebigen Auswahl an Code Elementen die Gitterparameter rekonstruiert werden. Die Verwendung sogenannter Finder Pattern für einen 2-D Code wird somit nicht nur überflüssig. Es können werden vielmehr auch die oben beschriebenen Nachteile, die von einem verschmutzen Finder Pattern herrühren vorteilhaft umgangen werden.

Dadurch, dass die Codeelemente durch ihre Form, ihre Ausrichtung in der Ebene und durch ihre flächenmässige Verteilung in der Ebene eine codierte Information bereitstellen, kann auf die Verwendung von Finder Pattern komplett verzichtet werden. Die Robustheit des Codes, insbesondere im Hinblick auf lokale Verschmutzungen kann insoweit verbessert werden.

Für die Codeelemente gilt insbesondere, dass sie ein nicht rotationssymmetrische geometrische Struktur, sondern vielmehr eine eindeutige, jeweils gedachte Zeigerstruktur definieren oder aufweisen, die zumindest für die mehreren möglichen Ausrichtungen des Codes in der Brühmaschine, d.h. für verschiedene Ausrichtungen in der Ebene des Bodens eindeutig ist.

Durch die hier vorgesehene Kopplung der Codeausrichtung mit der Ausrichtung seiner einzelnen Codeelemente, kann die für ein Decodieren und Auslesen des Codes erforderliche Information für die Codeorientierung von der Decodierung des Codes entkoppelt und unabhängig hiervon bestimmt werden. Dies kann sich vorteilhaft auf die Verwirklichung möglichst geringer und kostengünstiger technischer Anforderungen an eine optische Detektionseinheit und eine nachgeschaltete Bildauswertung auswirken.

Die Bestimmung einer von mehreren möglichen Ausrichtungen des Codes relativ zu einer Detektionseinheit der Brühmaschine, kann auf der Basis mindestens eines Codeelements und seiner Ausrichtung in der Ebene des Bodens bzw. seiner Ausrichtung in einer Bildebene einer Detektionseinheit erfolgen. Die Bestimmung der Ausrichtung des Codes ist somit unabhängig von der Anordnung mehrerer Codeelemente relativ zueinander.

Insbesondere ist die Ausrichtung des Codes in der Ebene des Bodens in jedem Codeelement enthalten, sodass die Information über die Ausrichtung und Orientierung der Kapsel relativ zur Detektionseinheit der Brühmaschine redundant im Code enthalten ist. Dies gilt auch für die dem Code zugrundeliegenden Gitterparameter. Auch diese sind redundant über die ganze Fläche codiert.

Nach einer weiteren Ausführungsform weisen die Codeelemente zumindest eines von erstem und zweitem Code zumindest zwei gerade und unter einem vorgegebenen Winkel aneinander angrenzende Linienabschnitte auf. Geradlinige Linienabschnitte der Codeelemente lassen sich in der Detektionseinheit besonders einfach und präzise erfassen. Die Detektionseinheit weist insbesondere eine zweidimensionale regelmässige Anordnung optischer bzw. lichtsensitiver Sensoren auf, die typischerweise als Detektorpixel zu bezeichnen sind.

Geradlinig verlaufende Linienabschnitte der Codeelemente können auf diese Art und Weise entsprechend der geometrischen Anordnung benachbarter Detektorpixel der Detektionseinheit abgebildet werden. Auf diese Art und Weise kann selbst mit nur einer geringen Anzahl an Detektorpixeln, mithin mittels einer nur eine vergleichsweise geringe Auflösung aufweisenden Detektionseinheit, zumindest die Ausrichtung der Linienabschnitte der Codeelemente zum Zwecke ihrer Ausrichtungsbestimmung aber auch die Lage einzelner Codeelemente innerhalb des 2-D Codes präzise erfasst werden.

Nach einer Weiterbildung hiervon ist ferner vorgesehen, dass zumindest ein Linienabschnitt der ersten Codeelemente im Wesentlichen parallel zu den Aussenrändern des im Wesentlichen rechteckigen oder quadratischen Codes verläuft. Die Aussenränder des Codes können, müssen aber nicht zwingend, optisch oder visuell erkennbar am Boden des Kapselbechers ausgestaltet sein. Es ist ferner denkbar, dass einzelne aussenliegende Codeelemente die Aussenränder des rechteckigen oder quadratischen Codes allein durch ihre Randlage quasi virtuell markieren. Die parallele Ausrichtung zumindest eines Linienabschnitts zu den Aussenrändern des Codes führt zu einer klar erkennbaren Codestruktur. Insbesondere können anhand visuell oder optisch erkennbarer Aussenränder mögliche und innerhalb eines gewissen Toleranzbereichs liegende geringfügige Abweichungen von den durch die Brühmaschine vorgegebenen mehreren möglichen Ausrichtungen des Codes bzw. der Kapsel erkannt und zur rechnerischen Fehlerkompensation bzw. Bildauswertung verwendet werden.

Für die Erkennung der Codestruktur ist eine parallele Ausrichtung von Linienabschnitten oder von Codeelementen relativ zum Rand des Codes nicht zwingend erforderlich. So kann die Codestruktur auch ausschliesslich in der Position der Codeelemente enthalten sein. Es können beliebige orientierbare Codeelemente verwendet werden, welche in Form und Grösse auch unterschiedlich sein können.

Nach einer weiteren Ausgestaltung verläuft zumindest ein Linienabschnitt der ersten oder zweiten Codeelemente im Wesentlichen parallel zu den Aussenrändern des quadratischen Bodens. Es ist dabei insbesondere vorgesehen, dass auch die Aussenränder des Codes parallel zu den Aussenränder des quadratischen Bodens verlaufen. Es kann ferner vorgesehen sein, dass die möglichen Ausrichtungen des Codes in der Ebene des Bodens, bzw. die typischerweise vier denkbaren Ausrichtungen der Kapsel in der Brühmaschine, mit vertikal bzw. horizontal verlaufenden Aussenrändern des quadratischen Bodens, bzw. horizontal oder vertikal verlaufenden Aussenrändern des rechteckigen oder quadratischen Codes zusammenfallen. Die Detektionseinheit und die hierin integrierte oder nachgeschaltete Bildauswertung kann insoweit mit einer oder zwei Vorzugsrichtungen (x, y) versehen werden, die parallel zu den Aussenrändern des quadratischen Bodens bzw. parallel zu den Aussenrändern des am Boden vorgesehenen rechteckigen oder quadratischen Codes verlaufen.

Ferner ist denkbar, dass zumindest die ersten Codeelemente ausschliesslich aus Linienabschnitten bestehen, welche sämtlich parallel zu Aussenrändern des Codes verlaufen.

Nach einer weiteren Ausgestaltung sind die Codeelemente, typischerweise sämtliche Codeelemente erster und zweiter Codes auf den Boden des Kapselbechers aufgelasert oder in den Boden eingelasert. Das Aufbringen der Codeelemente, mithin des gesamten Codes auf die Aussenseite des Bodens bzw. in das Material des Bodens, erfolgt mittels Laserstrahlung. Es kann hierbei insbesondere vorgesehen sein, dass das Material des Bodens bei Beaufschlagung mit Laserstrahlung in einem bestimmten vorgegebenen Wellenlängenbereich eine Farb- oder Texturänderung erfährt, sodass die hierdurch gebildeten Codeelemente besonders kontrastreich visuell darstellbar sind. Es ist ferner denkbar, dass die Codeelemente als Lasergravur am oder im Boden des Kapselbechers verwirklicht sind. Für das Anbringen der Codeelemente und des Codes am Boden des Kapselbechers sind daher keine Druckverfahren oder eine hiermit einhergehende Verbindung von Farbstoffen erforderlich. Das Auflasern oder Einlasern der Codeelemente auf oder in den Boden des Kapselbechers bewirkt eine besonders langlebige und robuste Codierung des Kapselbechers und damit der gesamten Kapsel.

Nach einer weiteren Ausgestaltung ist vorgesehen, dass zumindest einer von erstem und zweitem Code 50 bis 400 einzelne Codeelemente und vorzugsweise 70 bis 100 einzelnen Codeelemente umfasst, die zweidimensional und am Boden des Kapselbechers räumlich verteilt angeordnet sind. Die einzelnen Codeelemente sind insbesondere überlappungsfrei zueinander angeordnet. Sie sind insoweit beabstandet zueinander am Boden des Kapselbechers vorgesehen. Mittels der genannten Anzahl an Codeelementen sind insgesamt 100 bis 800 Bit an Informationen in den Boden des Kapselbechers integrierbar. Es ist hierbei insbesondere vorgesehen, dass jeweils ein Codeelement einen Informationsgehalt von 2 Bit enthält. Insbesondere ist der Informationsgehalt eines jeden Codeelements in der räumlichen Position des Codeelements in der Ebene des Bodens enthalten.

Nach einer weiteren Ausgestaltung ist ferner vorgesehen, dass zumindest einer von erstem Code und zweitem Code in eine regelmässige gedachte Anordnung von Codefeldern unterteilt ist, welche zumindest paarweise zu Codegruppen zusammengefasst sind. Innerhalb einer Codegruppe ist dabei nur ein einziges Codefeld mit einem Codeelement versehen, während die übrigen Codefelder einer Codegruppe frei bleiben. Weist eine Codegruppe beispielsweise vier aneinander angrenzende Codefelder auf, so werden für das Codeelement vier mögliche Platzhalter bereitgestellt. Eine derartige Codegruppe kann somit Zahlen von 1 bis 4, mithin einen Informationsgehalt von 2 Bit darstellen. Eine Codegruppe kann insbesondere eine zweidimensionale aneinander angrenzende Anordnung mehrerer Codefelder umfassen. Es ist beispielsweise denkbar, dass eine Codegruppe aus vier im Quadrat angeordneten Codefeldern besteht. Es sind jedoch auch andere zweidimensionale Konstellationen, wie zum Beispiel eine rechteckige Codegruppe denkbar, die zum Beispiel aus zwei horizontalen Reihen mit je drei Codefeldern besteht.

Nach einer weiteren Ausgestaltung hiervon enthält die lokale Position eines Codeelements innerhalb der Codegruppe eine Information. Der Gesamtinformationsgehalt einer Codegruppe ist direkt abhängig von der Anzahl zur Codegruppe gehörender Codeelemente. Weist die Codegruppe beispielsweise vier einzelne Codefelder auf, so kann jedes Codefeld per Definition eine einzige Information, beispielsweise eine Zahl "0, 1, 2, 3, ..." repräsentieren. Durch Positionierung eines Codeelements in einem einzigen Codefeld einer Codegruppe wird jenes Codefeld und der ihm zugeordnete Wert ausgewählt.

Die regelmässige Unterteilung des Codes in Codefelder und die Belegung einer aus Codefeldern gebildeten Codegruppe mit jeweils nur einem Codeelement führt dazu, dass der jeweilige Code, bezogen auf die Unterteilung in Codegruppen, eine über die Fläche des Codes homogene Dichte an Codeelementen aufweist. Das Vorliegen einer homogenen Informationsdichte kann insoweit bereits auf Bildebene des Codes ein Plausibilitäts- oder Prüfkriterium darstellen, mittels welchem Lesefehler erkannt werden, die z.B. durch Verschmutzungen hervorgerufen sein können, die von der Detektionseinheit und/oder einer nachgeschalteten Steuerung irrtümlich als Codeelemente interpretiert werden. In gleicher Art und Weise kann auch die Position einzelner oder mehrere Codeelemente untereinander ein Prüf- oder Plausibilitätskriterium darstellen.

Nach einer weiteren Ausgestaltung sind mehrere Codegruppen und/oder Codefelder zu einem Codewort zusammengefasst. Die Anzahl an Codegruppen und Codefeldern in einem Codewort kann beliebig gewählt sein. Typischerweise weist jedes Codewort eine identische Anzahl an Codeelementen bzw. eine identische Anzahl an Codegruppen auf. Für die Aufteilung in Codewörter kann vorgesehen sein, dass jedes Codewort aus einer ganzzahligen Anzahl von Codegruppen besteht. Ferner ist denkbar, dass ein Codewort beispielsweise eine oder mehrere Codegruppen sowie einzelne Codefelder umfasst. Ein Codewort kann insbesondere auch ein ungeradzahliges Vielfaches an Codefeldern aufweisen.

Insbesondere können mehrere Plausibilitäts- und/oder Qualitätsprüfungen auf unterschiedlichen Codeebenen implementiert sein. Es ist denkbar, dass eine erste Prüfung hinsichtlich einer vorgegebenen geometrischen Form einzelner Codeelemente erfolgt. Wird beispielweise ein Codeelement mit einer solchen geometrischen Struktur ausgelesen, die von einer vorgegebenen, beispielsweise L-förmigen Geometrie abweicht, kann dies bereits zum Verwerfen oder korrekten Erkennen des Codes führen.

Auf einer weiteren, bspw. zweiten Codeebene ist die Implementierung eines weiteren Prüf- oder Qualitätskriteriums denkbar. Beispielsweise kann hier direkt auf Bildebene geprüft werden ob sich innerhalb eines vorgegebenen Flächensegments der Ebene eine vorgesehene Anzahl an Codeelementen befindet. So kann z.B. eine Integritätsprüfung auf der Ebene einer jeden oder einzelner Codegruppen oder Codefelder durchgeführt werden. Es kann z.B. geprüft werden, ob eine Codegruppe jeweils genau ein Codeelement aufweist. Sind mehrere oder weniger als ein Codeelement pro Codegruppe vorhanden ist das Prüfkriterium nicht erfüllt. Dies kann dann gleichermassen der korrekten oder einer zu korrigierenden Erkennung des Codes dienen.

Schliesslich ist auch denkbar, auch auf der Ebene einzelner oder mehrerer Codewörter eine Plausibilitätsprüfung durchzuführen. So können insbesondere einzelne in Codewörtern enthaltene Prüfbits selektiv gelesen und zur Plausibilitätskontrolle ausgewertet werden. Für sämtliche zuvor beschriebenen Plausibilitäts- oder Qualitätsprüfungen ist eine komplette Dekodierung des Codes nicht erforderlich.

Für eine Decodierung muss grundsätzlich nur ein gewisser Anteil an Codefeldern, Codegruppen oder Codewörtern gelesen werden können. Die Plausibilitätsprüfungen und Qualitätsbewertungen von Codelementen, Codefeldern, Codegruppen und Codewörtern kann dann dazu verwendet werden um eine gute Auswahl zu treffen, und bei der Decodierung kann die Verlässlichkeit der zur Verfügung stehenden Informationen in den Decodierungsprozess mit einbezogen werden. Es können insbesondere alle sich in einer vorgegebenen Situation ergebenden Decodiermöglichkeiten miteinander verglichen. Über die Qualitätsbewertung der jeweils ermittelten Decodiermöglichkeiten kann dann eine Entscheidung über den codierten Inhalt mit einer gewissen Wahrscheinlichkeit oder Vertrauenswürdigkeit gefällt werden.

Ferner kann durch die Möglichkeit einer Codeprüfung oder Qualitätsbestimmung auf der Ebene der Codeelemente, auf der Ebene der Codefelder oder Codegruppen und/oder auf der Ebene der Codewörter kann die Qualität des Codes, d.h. seine Erkennbarkeit mehrfach und somit recht zuverlässig bestimmt werden. Insbesondere kann die Qualität der Codeerkennung auf jeder dieser Ebenen bewertet werden.

Unabhängig hiervon ist generell denkbar, dass eine Bewertung der Qualität aufgenommener Codes auf Bildebene zur Berechnung eines Rasters sowie zur Berechnung einer oder mehreren, dem Code zugrunde liegenden Gitterkonstanten einfliesst.

So kann zur Codeerkennung insbesondere vorgesehen sein, ein Gitter bzw. eine Gitterkonstante des Codes durch Approximation, insbesondere durch sog. "Fitten" zu ermitteln um insoweit eine Skalierung des aufgenommenen Codes durchzuführen. Für jene Skalierung aber auch für die Positionierung eines Gitters kann die auf Bildebene ermittelte Qualität des Codes verwendet werden. Auch kann die Decodierung des Codes selbst mittels der Qualitätserkennung erfolgen oder vereinfacht werden. Da der Code redundant und mehrfach, bspw. in jedem Codewort enthalten ist können auf der Basis einer Qualitätsbestimmung sämtlicher Codewörter diejenigen Wörter zur Codedekodierung ausgewählt werden, welche unter sämtlichen Codewörtern die höchste Qualität oder höchste Bewertung aufweisen. Decodierfehler können auf diese Art und Weise weitreichend minimiert werden.

Sollte die Decodierung auf der Basis derjenigen Wörter mit der höchsten Qualitätsbewertung nicht möglich sein oder ein nicht plausibles Ergebnis liefern ist vorgesehen, die Gitterkonstante und/oder die Gitterposition zu ändern und die Bewertung und Decodierung erneut durchzuführen.

Nach einem weiteren Aspekt betrifft die Erfindung ferner ein System zum Zubereiten eines Getränks aus einer zuvor beschriebenen Kapsel. Das System umfasst eine Kapsel sowie eine Brühmaschine mit einer Brühkammer und einer optischen Detektionseinheit zum Auslesen des Codes auf dem Boden des Kapselbechers, während die Kapsel sich in einer Leseposition oberhalb der Brühkammer befindet.

Die Detektionseinheit ist hierbei derart ausgebildet, dass sie die ersten Codeelemente des ersten Codes unabhängig von den zweiten Codeelementen des zweiten Codes erkennt und unabhängig voneinander decodiert bzw. auswertet.

Nach einem weiteren Aspekt betrifft die Erfindung ferner ein Verfahren zum Identifizieren einer zuvor beschriebenen Kapsel in einer Brühmaschine zum Zubereiten eines Getränks. Das Verfahren weist hierbei die folgenden Schritte auf:
- Übergeben der von einem Benutzer in die Brühmaschine eingelegten Kapsel in eine Leseposition,
- Erkennung von ersten Codeelementen eines ersten Codes und Erkennung von zweiten Codeelementen eines zweiten Codes,
- separate Decodierung erster und zweiter Codes zur Identifikation des Kapseltyps anhand der in zumindest einer von erstem und zweitem Code enthaltenen Informationen.

Auf diese Art und Weise können unterschiedliche Informationen mittels unterschiedlicher Codes direkt auf Bildebene erkannt sowie separat und bedarfsgerecht ausgelesen und decodiert werden. Eine derart gestaffelte Codierung der Kapsel ist insbesondere für unterschiedliche Typen von Brühmaschinen geeignet und vorgesehen.

Es ist gilt generell, dass sämtlich in Verbindung mit der Kapsel beschriebenen Merkmale und Vorteile auch gleichermassen für das System und das hier beschriebene Verfahren gelten; und umgekehrt.

Der Begriff von im Wesentlichen identischen oder im Wesentlichen identisch ausgerichteten Codeelementen bringt zum Ausdruck, dass die Codeelemente im Rahmen der Auflösungsgenauigkeit der Detektionseinheit und der nachgeschalteten Bildauswertung identisch bzw. identisch ausgerichtet am Kapselboden vorgesehen sind. Die Detektionseinheit und die nachgeschaltete Bildauswertung können eine gewisse Fehlertoleranz bereitstellen, sodass selbst geringfügige aber auch grössere Abweichungen von einer vorgegebenen Geometrie, Position und/oder vorgegebenen Ausrichtung der Codeelemente noch zuverlässig erfassbar sind.

Geometrische Abweichungen der Codeelemente hinsichtlich ihrer Längs- oder Quererstreckung von bis zu 10 % oder bis zu 20 %, mithin bis zu 30 % oder sogar bis zu 40% sollen hierbei noch in den Toleranzbereich der Detektionseinheit fallen und können somit noch als im Wesentlichen identisch gelten. Strich- und Liniendicken können hingegen bis zu 200% von einer vorgegebenen Stärke abweichen. Hinsichtlich einer Ausrichtung sind Abweichungen von 5°, bis hin zu 20°, 30° oder sogar 35° tolerierbar, bzw. von der Detektionseinheit und der nachgeschalteten Bildauswertung kompensierbar.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine perspektivische Ansicht einer Kapsel zur Getränkezubereitung,
- Fig. 2: eine Seitenansicht der Kapsel gemäss Fig. 1,
- Fig. 3: eine schematische Darstellung einer zur Aufnahme einer Kapsel ausgestalteten Brühmaschine,
- Fig. 4: eine schematische und vereinfachte Darstellung einer in der Maschine vorgesehenen Detektionseinheit zum visuellen Erfassen des Codes am Boden des Kapselbechers,
- Fig. 5: eine schematische Darstellung eines am Boden des Kapselbechers vorgesehenen ersten Codes,
- Fig. 6: eine vereinfachte und schematische Darstellung einer regelmässigen Unterteilung des ersten Codes in einzelne Codefelder, Codegruppen und Codewörter,

- Fig. 7: die unterschiedlichen Positionen eines Codeelements in unterschiedlichen Codefeldern einer Codegruppe,
- Fig. 8: eine vereinfachte schematische Darstellung eines Bodens des Kapselbechers mit einem ersten und mit einem zweiten Code und
- Fig. 9: eine schematische Darstellung zweier unterschiedlicher Codeelemente.

### Detaillierte Beschreibung

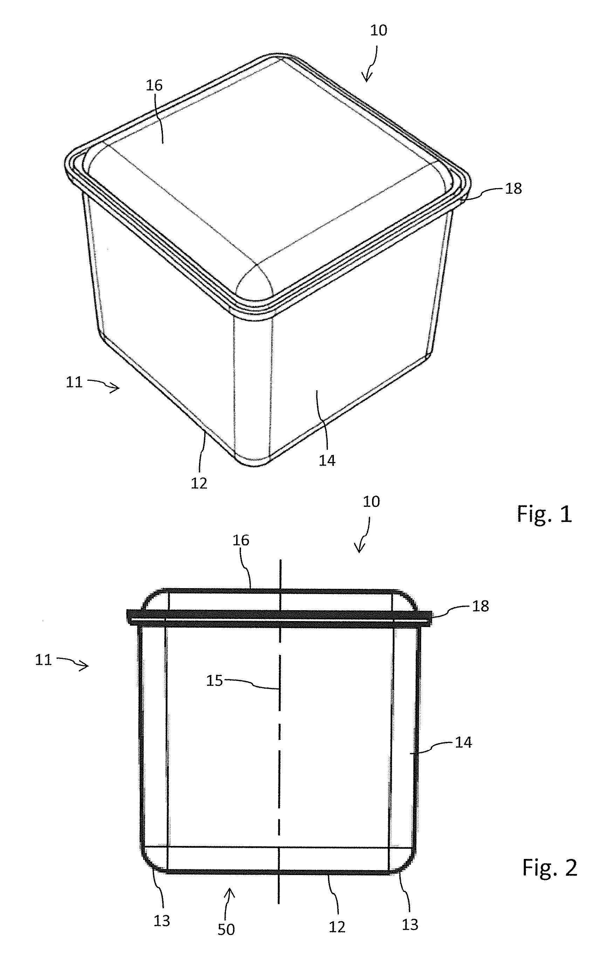

Die in den Fig. 1 und 2 gezeigte Kapsel 10 weist einen topfförmigen Kapselbecher 11 mit einem quadratischen Kapselboden 12 auf. Der Kapselbecher 11 ist dem Boden 12 abgewandt, mit einem sich über den gesamten Querschnitt des Kapselbechers 11 erstreckenden Kapseldeckel 16 verschlossen. Der Kapseldeckel 16 und die Seitenwände 14 des Kapselbechers 11 bilden einen nach aussen ragenden Flanschabschnitt 18. Der umlaufende Flanschabschnitt 18 dient neben einer Verschlussfunktion einem mechanischen Codieren der Kapsel. Eine an einer Brühmaschine 20 vorgesehene Aufnahme 21, typischerweise in Form eines Einwurf-oder Aufnahmeschachts, kann eine der Aussenkontur der in Fig. 2 in Seitenansicht gezeigten Kapsel 10 korrespondierende Geometrie aufweisen, sodass die Kapsel zwingend in einer Orientierung oder Ausrichtung in die Aufnahme 21 der Brühmaschine 20 einführbar ist, in welcher der Boden 12 des Kapselbechers einer Detektionseinheit 24 zugewandt ist.

Aufgrund der quadratischen Geometrie des Bodens 12 des Kapselbechers 11 und des im Wesentlichen quadratischen umlaufenden Flanschabschnitts ergeben sich bei korrekter Positionierung der Kapsel 10 in einer Leseposition L innerhalb der Brühmaschine 20 immer noch vier verschiedene mögliche Orientierungen der Kapsel 10 und des am Boden 12 vorgesehenen optisch lesbaren bzw. visuell erkennbaren Codes 50. Die unterschiedlichen und mehreren möglichen Ausrichtungen des Codes 50 sind durch Drehungen der Kapsel bezüglich ihrer gedachten Drehachse 15 bedingt, die sich im Wesentlichen senkrecht zum Boden 15 und senkrecht zum Kapseldeckel 16 erstreckt, und welche insbesondere mit einem geometrischen Mittelpunkt von Boden 12 und Kapseldeckel 16 zusammenfallen kann.

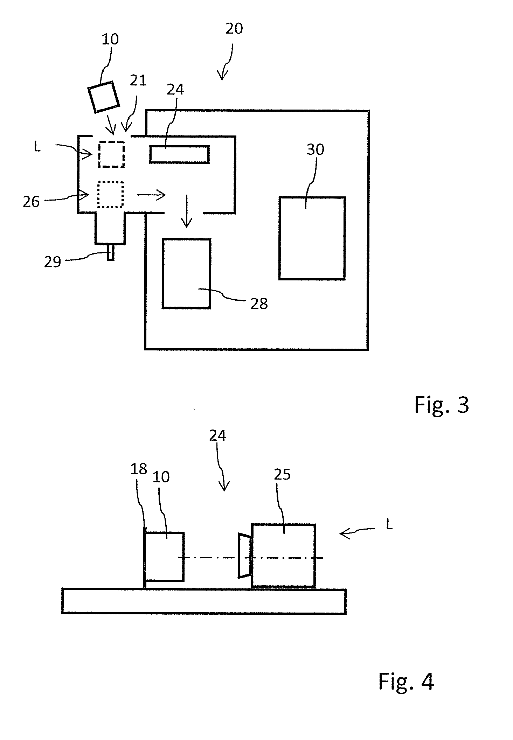

Die in Fig. 3 gezeigte Brühmaschine 20 ist zur Aufnahme zumindest einer Kapsel 10 vorgesehen, welche durch Einführen in die Aufnahme 21 zunächst in einer Leseposition L gehalten werden kann. In jener Leseposition L kann mittels der Detektionseinheit 24 der an der Aussenseite des Bodens 12 des Kapselbechers 11 vorgesehene Code 50 visuell erfasst und einer Bildauswertung zugeführt werden, mittels welcher die codierte Information decodierbar ist. Der Leseposition L nachgelagert, befindet sich eine Brühkammer 26, in welcher die mit Extraktionsgut gefüllte Kapsel 10 zumindest partiell perforiert und das Extraktionsgut mit einer für den Extraktionsvorgang vorgesehenen Flüssigkeit, insbesondere mit heissem Wasser, beaufschlagbar ist. Das Extrakt bzw. das auf diese Art und Weise zubereitete Getränk kann alsdann über einen Auslass 29 in einem nicht explizit dargestellten Trinkgefäss gesammelt werden. Die verbrauchte Kapsel 10 kann nach dem Brühvorgang einem Auffangbehälter 28 zugeführt werden, welcher von Zeit zu Zeit einer Entleerung bedarf.

Die Brühmaschine 20 ist ferner mit einer Steuerung 30 versehen, die einerseits mit der Detektionseinheit 24 und die andererseits mit der Brühkammer 26 gekoppelt ist. Eine Bildauswertung kann entweder in der Detektionseinheit 24 oder in der Steuerung 30 enthalten sein. Durch Auslesen der Codeinformation der Kapsel 10 kann der Brühvorgang gesteuert, zumindest aber beeinflusst werden. Beispielsweise kann der Code 50 Informationen zu einem voreingestellten Brühprogramm beinhalten, welches durch blosses visuelles Erkennen des Codes 50 automatisch durch die Steuerung 30 anwählbar ist. Der Bedienungskomfort der Brühmaschine 20 kann auf diese Art und Weise gesteigert und verbessert werden.

Ferner kann durch Vorsehen eines Codes an der Kapsel erreicht werden, dass lediglich originale und vom Hersteller für die Brühmaschine 20 vorgesehene Kapseln einem Brühvorgang unterziehbar sind. Produktfälschungen sowie für die Brühmaschine nicht vorgesehene Kapseln 10, die zwar eine mit den in Fig. 1 und 2 gezeigten Kapseln 10 identische Aussengeometrie aufweisen, die aber keinen oder einen fehlerhaften Code 50 aufweisen, können von der Detektionseinheit 24 bzw. von der Steuerung 30 erkannt werden, sodass das Einleiten eines Brühvorgangs unterbindbar ist.

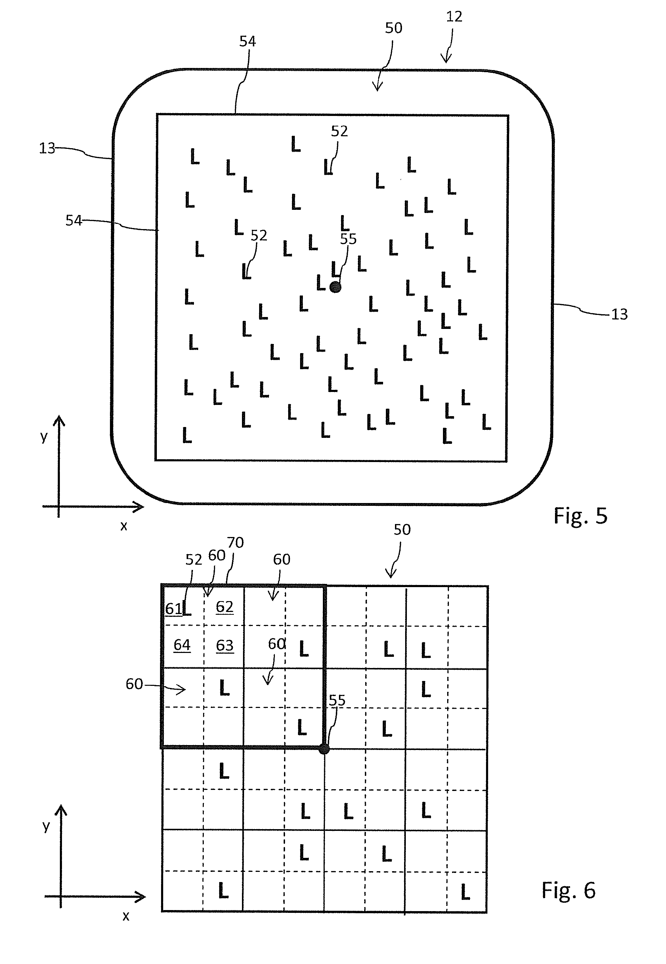

In der schematischen Darstellung gemäss Fig. 4 ist die Detektionseinheit 24 vereinfacht dargestellt. Die Detektionseinheit 24 weist insbesondere eine Kamera 25 auf, die typischerweise und von Vorteil mit ihrer optischen Achse in etwa mit dem Mittelpunkt 55 eines ersten, in den Fig. 5 und 6 gezeigten Codes 50 im Wesentlichen zusammenfällt, sobald sich die Kapsel 10 in der Leseposition L innerhalb der Brühmaschine 20 befindet. Ein erster Code 50 am Boden 12 des Kapselbechers 11 ist schematisch in Fig. 5 gezeigt. Der erste Code 50 weist einen zumindest gedachten Mittelpunkt 55 auf, welcher zentrisch bzw. mittig innerhalb der Aussenränder 54 des ersten Codes 50 liegt.

Der erste Code 50 weist ferner eine zweidimensionale Anordnung mehrerer erster Codeelemente 52 auf. Jedes der ersten Codeelemente 52 enthält eine Information, aus welcher eine von mehreren möglichen Ausrichtungen des Codes 50 in der Ebene des Bodens 12 eindeutig ableitbar ist. In der in Fig. 5 und 6 dargestellten X-Y-Ebene, welche beispielsweise die Bildebene der Detektionseinheit 24 wiedergibt oder mit dieser zusammenfällt, kann der Code 50 insgesamt in vier verschiedenen Ausrichtungen angeordnet sein. Die einzelnen Ausrichtungen können beispielsweise durch eine Drehung der Kapsel 10 um jeweils 90° bezüglich ihrer Drehachse 15 eingenommen werden. Die Drehachse 15 des Kapselbechers 11 kann dabei mit dem gedachten Mittelpunkt 55 des ersten Codes 50 zusammenfallen.

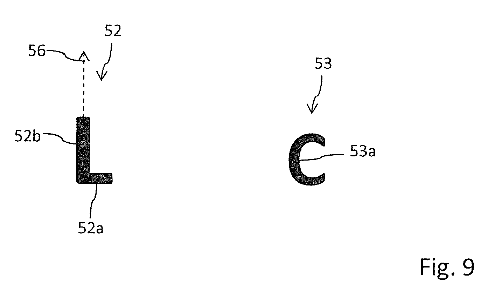

Erkennbar sind sämtliche ersten Codeelemente 52 des ersten Codes 50 identisch bzw. im Wesentlichen identisch ausgebildet. Sie weisen eine L-förmige Kontur mit einem ersten, sich in Fig. 5 und Fig. 9 horizontal erstreckten Linienabschnitt 52a und mit einem zweiten, im Wesentlichen vertikal ausgerichteten Linienabschnitt 52b auf. In der in den Fig. 5 und 9 gezeigten Ausrichtung des Codes 50 und seiner einzelnen Codeelemente 52 liegt der Schnittpunkt der Linienabschnitte 52a, 52b links unten. Ein kurzer Schenkel bzw. der erste Linienabschnitt 52a erstreckt sich vom Schnittpunkt horizontal nach rechts, während der längere, d.h. der zweite Linienabschnitt 52b sich vom Schnittpunkt der Linienabschnitte 52a, 52b vertikal nach oben erstreckt.

Jene Anordnung und Ausrichtung der einzelnen Linienabschnitte 52a, 52b macht eine eindeutige Bestimmung der Ausrichtung des zugehörigen Codeelements 52 und des hiervon gebildeten Codes 50 möglich. Insbesondere kann dem Codeelement 52 eine Zeigerstruktur 56 eindeutig zugeordnet werden. Vorliegend ist in Fig. 9 beispielsweise eine Zeigerstruktur 56 in Verlängerung des zweiten Linienabschnitts 52b gezeigt, wobei die Zeigerstruktur 56 vom Schnittpunkt der beiden Linienabschnitte 52a, 52b weg weist. Bei einer Drehung des Codes 50 und seiner Codeelemente 52, beispielsweise um 90° im Uhrzeigersinn, ergibt sich eine entsprechende Drehung der Linienabschnitte 52a, 52b sowie der zugehörigen Zeigerstruktur 56. Diese würde sodann horizontal nach rechts zeigen. Indem sämtliche Codeelemente 52 im Wesentlichen identisch zueinander ausgerichtet sind und indem die Orientierung der Codeelemente 52 fest mit der Orientierung des Codes 50 verknüpft ist, kann durch die Bestimmung der Ausrichtung eines einzelnen beliebigen Codeelements 52 die Ausrichtung bzw. Orientierung des Codes 50 in der Ebene des Bodens 12 zwischen den mehreren möglichen Ausrichtungen vergleichsweise einfach sowie mit geringem soft- und hardwaretechnischem Aufwand ermittelt werden.

Es ist hierbei insbesondere von Vorteil, wenn zumindest ein Linienabschnitt 52a, 52b der ersten Codeelemente 52 im Wesentlichen parallel zu den Aussenrändern 13 des quadratischen Bodens 12 und/oder im Wesentlichen parallel zu den Aussenrändern 54 des im Wesentlichen rechteckigen oder quadratischen Codes 50 verläuft. Ferner erweist sich eine rechtwinklige Anordnung der unterschiedlich langen Linienabschnitte 52a, 52b für eine besonders robuste und präzise Lageerkennung der Codeelemente 52 als vorteilhaft. Die Detektionseinheit 24 kann insbesondere eine regelmässige zweidimensionale Anordnung mehrerer Detektorpixel aufweisen, die horizontal nebeneinander und vertikal untereinander, entsprechend der X-Y-Ebene angeordnet sein können. Indem die Linienabschnitte 52a, 52b der ersten Codeelemente 52 entweder vertikal oder horizontal bezüglich der X- bzw. Y-Achse ausgerichtet sind, kann selbst bei einer niedrigen Auflösung der Detektionseinheit oder selbst bei Abbildungsfehlern immer noch eine für die Bestimmung der Ausrichtung des Codes 50 ausreichende Bilderkennung bereitgestellt werden.

Die Verwendung L-förmiger Codeelemente 52 ist lediglich beispielhaft beschrieben und ist nicht zwingend vorzusehen. Grundsätzlich ist denkbar, auch andere, wie in Fig. 9 gezeigte Codeelemente 53 mit einer beispielsweise C-förmigen Grundgeometrie und einem Bogenabschnitt 53a zu verwenden. Gleichermassen sind auch U-förmige, V-förmige oder T-förmige Codeelemente denkbar.

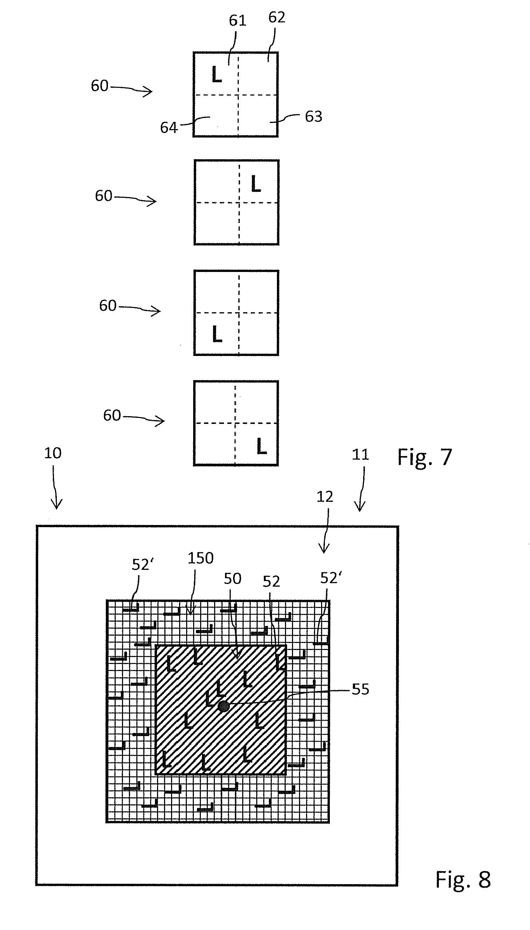

In Fig. 6 ist schematisch dargestellt, dass der erste Code 50 in eine regelmässige gedachte Anordnung von Codefeldern 61, 62, 63, 64 unterteilt ist, welche zumindest paarweise zu Codegruppen 60 zusammengefasst sind. Es ist hierbei lediglich nur ein einziges Codefeld 61, 62, 63, 64 innerhalb einer Codegruppe 60 mit einem Codeelement 52 versehen, während die übrigen Codefelder 61, 62, 63,64 einer Codegruppe 60 frei von Codeelementen 52 bleiben. In Fig. 7 sind die unterschiedlichen denkbaren Positionen eines Codeelements 52 in einer aus insgesamt vier Codefeldern 61, 62, 63, 64 gebildeten Codegruppe 60 gezeigt. Die vier in Fig. 7 dargestellten Codegruppen 60 repräsentieren jeweils einen von vier unterschiedlichen Zuständen. Insoweit repräsentiert eine von insgesamt vier Codefeldern gebildete Codegruppe 60 eine Information von insgesamt 2 Bit (2² = 4).

Die Regel, nach welcher jede Codegruppe 60 mit nur einem einzigen Codeelement 52 versehen ist, bewirkt, dass die auf die Flächengrösse der Codegruppen 60 normierte Flächendichte an ersten Codeelementen 52 über die Gesamtfläche des ersten Codes 50 konstant ist. Ferner enthält jedes beliebige, eine ganzzahlige Anzahl an Codegruppen aufweisende Flächensegment des ersten Codes 50 eine identische Informationsdichte. Letztlich ist die lokale Position eines Codeelements innerhalb der Codegruppe Träger der betreffenden Information. Dadurch, dass die Codeinformation in der Position einzelner Codeelemente 52 relativ zu den Codegruppen 60 bzw. relativ zum Aussenrand 54 des Codes 50 enthalten ist, kann die Codeinformation durch einen einzigen Typ identischer Codeelemente 52 im Code hinterlegt werden.

Es ist ferner vorgesehen, dass eine Codegruppe 60 zumindest vier Codefelder 61, 62, 63, 64 und hiermit verbunden eine Mindestinformation mit 2 Bit Länge aufweist. Ferner können mehrere Codegruppen 60 und/oder mehrere Codefelder 61, 62, 63, 64 zu einem Codewort 70 zusammengefasst werden. In der in Fig. 6 gezeigten Ausgestaltung sind die im linken oberen Quadranten des Codes 50 vorgesehenen Codegruppen 60 zu einem Codewort 70 zusammengefasst, welches insgesamt sechzehn Codefelder 61, 62, 63, 64 aufweist.

Gemäss der Forderung, dass eine Codegruppe 60 nur ein einziges Codeelement 52 enthalten oder aufweisen darf, kann eine erste Integritätsprüfung des Codes 50 unabhängig von einer Decodierung des Codes 50 und somit bereits direkt auf der Basis eines aufgenommenen Bildes des Codes 50 erfolgen. Erkennt die Detektionseinheit 24 beispielsweise, dass in mehreren Codefeldern 60 mehr als nur ein Codeelement 52 enthalten ist, so kann dies direkt als Indiz dafür gewertet werden, dass es sich um einen fehlerhaften oder verschmutzten Code 50 oder um eine Plagiatkapsel handelt. In gleicher Art und Weise kann auch die Anzahl an Codeelementen 52 innerhalb eines Codeworts 70 überprüft werden.

Es ist ferner vorgesehen, dass die Codeinformation des Codes 50 redundant in mehreren Codewörtern 70 enthalten ist. Auf diese Art und Weise kann sichergestellt werden, dass bei bereichsweisen Verschmutzungen im Bereich des Codes 50 oder der Detektionseinheit 24 der Code 50 und die hierin enthalten Codeinformation verlässlich auslesbar sind. Es ist dabei insbesondere denkbar, dass beispielsweise durch Zuordnung und Identifizieren einzelner Codeelemente 52 zu einzelnen Codewörtern 70 die Abbildungs- oder Auslesequalität einzelner Codewörter 70 ermittelt wird. Sollte beispielsweise für ein Codewort 70 in einem aufgenommenen Bild eine geforderte Anzahl an Codeelementen 52 nicht enthalten sein, so ist dies ein Indiz dafür, dass das betreffende Codewort 70 einer Verschmutzung oder einem Abbildungsfehler unterliegt. Aus der Menge der Codewörter 70 werden typischerweise nur diejenigen für die Decodierung ausgewählt, welche eine vorgegebene Anzahl von Codeelementen 52 aufweisen.

Sind für die Decodierung nicht genügend komplette Codewörter 70 vorhanden können an den betreffenden Stellen mehrere infrage kommende Abschätzungen oder Annahmen getroffen werden. Im Zuge einer Integritätsprüfung der sich nachfolgend aus der jeweiligen Annahme ergebenden Codeinformationen, bzw. einzelner Informationsbits kann dann nach dem Decodieren entschieden werden ob die Annahme richtig war oder nicht. Dementsprechend kann aufgrund der Integritätsprüfung auch eine andere Annahme getroffen werden. Jener Vorgang kann iterativ solange wiederholt werden, bis die sich aus der getroffenen Annahme ergebende Codeinformation die Kriterien der Integritätsprüfung erfüllt.

Ein Codewort 70 kann prinzipiell neben der in Fig. 6 dargestellten Gruppierung einzelner Codegruppen 60 auch beispielsweise aus einer oder mehreren Codegruppen und zusätzlich aus einem oder mehreren Codefeldern bestehen, sodass die Gesamtanzahl an Codefeldern 61, 62, 63, 64 eines Codeworts 70 ein ungeradzahliges Vielfaches der Anzahl an Codefeldern 61, 62, 63, 64 pro Codegruppe 60 ist. Es ist hierbei denkbar, dass einzelne Codefelder 61, 62, 63, 64 eine Art Prüfbit oder Prüfcode enthalten, während die Codewörter 70 Träger der eigentlichen Codeinformation sind.

Wie in Fig. 8 gezeigt, ist bei der Kapsel 10 gemäss der Erfindung am Boden 12 des Kapselbechers 11 nicht nur ein erster Code 50, sondern zusätzlich zum ersten Code 50 noch ein zweiter Code 150 vorgesehen. Während der erste Code 50 mit seinen ersten Codeelementen 52 in etwa mittig oder in einem mittigen Bereich des Bodens 12 angeordnet ist, befindet sich der zweite Code 150 mit seinen zweiten Codeelementen 52', bezogen auf einen geometrischen Mittelpunkt des ersten Codes 50 radial ausserhalb des ersten Codes 50. In der Ausführungsform gemäss Fig. 8 umschliesst der zweite Code 150 den ersten Code 50 in Umfangsrichtung vollständig. Erster und zweiter Code 50, 150 weisen dabei jeweils eine rechteckige oder quadratische Aussenkontur auf. Mit anderen Worten befindet sich der erste Code 50 innerhalb des zweiten Codes 150.

Die Codes 50, 150 sind jedoch nicht überdeckend ausgestaltet. Im Bereich des innenliegenden ersten Codes 50 befinden sich ausschliesslich erste, dem ersten Code zugehörige Codeelemente 52. Die zweiten Codeelemente 52' können identisch zu den ersten Codeelementen 52' ausgestaltet sein. Es ist dabei jedoch vorgesehen, dass dann erste und zweite Codeelemente 52, 52' zur eindeutigen und besseren Unterscheidung von erstem und zweitem Code 50, 150 unterschiedlich ausgerichtet sind. Sämtliche ersten Codeelemente 52 sind hierbei im Wesentlichen identisch ausgerichtet, während auch sämtliche zweiten Codeelemente 52' im Wesentlichen identisch ausgerichtet sind. Im in Fig. 8 gezeigten Ausführungsbeispiel ist die Orientierung der zweiten Codeelemente 52' im Vergleich zur Orientierung der ersten Codeelemente 52 um 90° entgegen dem Uhrzeigersinn gedreht.

Es ist jedoch abweichend hiervon denkbar, dass beispielsweise die zweiten Codeelemente 52' anstelle einer L-förmigen Kontur eine andere Geometrie, beispielsweise eine C-förmige Kontur oder eine U-förmige Kontur aufweisen, die als solches von der Kontur und Geometrie der ersten Codeelemente 52 visuell unterscheidbar ist. Für die Bestimmung der Ausrichtung von erstem und zweitem Code 50, 150 ist es prinzipiell ausreichend, wenn lediglich eines von ersten und zweiten Codeelementen 52, 52' eine Information enthält, aus welcher eine von mehreren möglichen Ausrichtungen des Codes 50, 150 in der Ebene des Bodens 12 eindeutig ableitbar ist. Anstelle von gedrehten L-förmigen zweiten Codeelementen 52' könnten auch punktförmige oder rotationssymmetrische Codeelemente prinzipiell Verwendung finden.

Die ersten und zweiten Codes 50, 150 enthalten typischerweise unterschiedliche Codeinformationen. Der erste Code 50 enthält typischerweise für einen Brühvorgang vorgesehene Informationen, beispielsweise hinsichtlich Brühprogramm, Wassermenge, Brühtemperatur, Brühdruck, Brühzeit oder Präinfusionszeit, während der aussenliegende und womöglich nur optional für bestimmte Brühmaschinen 20 zu verwendende Code 150 weitere Zusatzinformationen zum Extraktionsgut, wie beispielsweise ein Mindesthaltbarkeitsdatum, einen Produktionsort, einen Herkunftsort oder eine Chargennummer enthält.

Die unterschiedlichen bzw. unterschiedlich ausgerichteten Codeelemente 52, 52' ermöglichen eine visuelle Trennung von erstem und zweitem Code 50, 150, sodass diese separat und unabhängig voneinander detektiert, ausgelesen und decodiert werden können. Die Ausrichtung der zweiten Codeelemente 52' relativ zu den Aussenrändern 54 des ersten Codes 50 oder des zweiten Codes 150 sowie die Anordnung der zweiten Codeelemente 52' untereinander, insbesondere deren Anordnung in eine zumindest gedachte oder virtuelle Unterteilung in Codefelder 61, 62, 63, 64, Codegruppen 60 und Codewörter 70 kann im Wesentlichen identisch zu den ersten Codeelementen 52 ausgestaltet sein. Auf diese Art und Weise kann sowohl der erste Code 50 als auch der zweite Code 150 mit ein und derselben Bildauswertung erkannt, ausgelesen und decodiert werden.

Die Redundanzprüfung ist vorliegend derart gewählt, dass bereits bei einer Lesbarkeit von 10 % bis 15 % der Codefläche die Codeinformation decodierbar ist. Durch die homogene Verteilung von Codegruppen 60 und Codewörtern 70 über die Fläche des Codes 50 ist die Codeinformation über der Fläche des Codes 50 quasi gleichverteilt. Dies macht den Code 50 besonders robust bei bereichsweisen Verschmutzungen oder Abbildungsfehlem.

Durch die vorgegebene Randbedingung, dass eine von Codeelementen 61, 62, 63, 64 gebildete Codegruppe 60 genau ein Codeelement 52 aufweist, kann eine Integritäts-und Plausibilitätsprüfung von Codewörtern 70 direkt auf Bitebene und auf Bildebene erreicht werden. Ferner kann durch die homogene Verteilung von Codeelementen innerhalb von Codegruppen eine konstante Schreibzeit für den Code 50 am Boden 12 des Kapselbechers 11 erreicht werden. Pro Zeiteinheit wird beim Beschriften des Bodens 12, etwa mittels Laser, immer dieselbe Anzahl an Codeelementen 52 geschrieben.

Es ist sogar denkbar, eine Integritätsprüfung des Codes 50 bzw. der im Code 50 enthaltenen Codewörter 70 oder Codegruppen 60 rein auf Bildebene durchzuführen. Je besser eine Integritätsprüfung auf Bildebene erfolgt, desto weniger Prüfbits sind den Codewörtern 70 hinzuzufügen. Es ist sogar denkbar, eine Integritätsprüfung des Codes 50 vollständig auf Bildebene durchzuführen, sodass auf Prüfbits innerhalb des Codes 50 weitgehend verzichtet werden kann.

### Bezugszeichenliste

- 10: Kapsel
- 11: Kapselbecher
- 12: Boden
- 13: Aussenrand
- 14: Seitenwand
- 15: Drehachse
- 16: Kapseldeckel
- 18: Flanschabschnitt
- 20: Brühmaschine,
- 21: Aufnahme
- 22: Brüheinheit
- 24: Detektionseinheit
- 25: Kamera
- 26: Brühkammer
- 28: Auffangbehälter
- 29: Auslass
- 30: Steuerung
- 50: Code
- 52: Codeelement
- 52': Codeelement
- 52a: Linienabschnitt
- 52b: Linienabschnitt
- 53: Codeelement
- 53a: Bogenabschnitt
- 54: Aussenrand
- 55: Mittelpunkt
- 56: Zeigerstruktur
- 60: Codegruppe
- 61: Codefeld
- 62: Codefeld
- 63: Codefeld
- 64: Codefeld
- 70: Codewort
- 150: Code

## Patentansprüche

1. Kapsel zur Getränkezubereitung in einer Brühmaschine, wobei die Kapsel einen mit einem Extraktionsgut gefüllten Kapselbecher (11) mit einem im Wesentlichen quadratischen Boden (12) und einen den Kapselbecher (11) verschliessenden Kapseldeckel (16) aufweist, **gekennzeichnet durch** zumindest einen ersten optisch lesbaren Code (50) am Boden (12) des Kapselbechers (11), welcher eine zweidimensionale Anordnung mehrerer erster Codeelemente (52, 53) aufweist, und ferner **gekennzeichnet durch** zumindest einen zweiten optisch lesbaren Code (150) am Boden (12) des Kapselbechers (11), welcher eine zweidimensionale Anordnung mehrerer zweiter Codeelemente (52') aufweist, die bezogen auf einen Mittelpunkt (55) des ersten Codes (50) radial ausserhalb des ersten Codes (50) liegen.

2. Kapsel nach Anspruch 1, wobei der zweite Code (150) den ersten Code (50) in Umfangsrichtung vollständig umschliesst.

3. Kapsel nach einem der vorhergehenden Ansprüche, wobei die ersten Codeelemente (52) und die zweiten Codeelemente (52') im Wesentlichen identisch sind.

4. Kapsel nach Anspruch 1, wobei zumindest einer von erstem und zweitem, Code (50, 150) jeweils eine Anzahl im Wesentlichen identischer und im Wesentlichen identisch ausgerichteter Codeelemente (52, 53, 52') aufweist.

5. Kapsel nach einem der vorhergehenden Ansprüche, wobei die ersten Codeelemente (52) im Vergleich zu den zweiten Codeelementen (52') unterschiedlich ausgerichtet sind.

6. Kapsel nach einem der vorhergehenden Ansprüche, wobei der erste Code (50) und der zweite Code (150) unterschiedliche erste und zweite Codeinformationen enthalten.

7. Kapsel nach einem der vorhergehenden Ansprüche, wobei zumindest einer von erstem und zweitem Code (50, 150) eine rechteckige oder quadratische Aussenkontur aufweisen.

8. Kapsel nach einem der vorhergehenden Ansprüche, wobei die Codeelemente (52, 53, 52') zumindest eines von erstem und zweiten Code (50, 150) jeweils eine Information enthalten, aus welcher eine von mehreren möglichen Ausrichtungen des jeweiligen Codes (50, 150) in der Ebene des Bodens (12) eindeutig ableitbar ist.

9. Kapsel nach einem der vorhergehenden Ansprüche, wobei die Codeelemente (52, 53, 52') zumindest eines von erstem und zweitem Code (50, 150) zumindest zwei gerade und unter einem vorgegebenen Winkel aneinander angrenzende Linienabschnitte (52a, 52b) aufweisen.

10. Kapsel nach Anspruch 9, wobei zumindest ein Linienabschnitt (52a, 52b) der Codeelemente (52, 52') im Wesentlichen parallel zu den Aussenrändern (54) des ersten oder zweiten Codes (50, 150) und/oder parallel zu den Aussenrändern (13) des quadratischen Bodens (12) verläuft.

11. Kapsel nach einem der vorstehenden Ansprüche, **dadurch gekennzeichnet, dass** die Codeelemente (52, 53, 52') auf den Boden (12) des Kapselbechers (11) aufgelasert oder in den Boden (12) eingelasert sind.

12. Kapsel nach einem der vorhergehenden Ansprüche, wobei zumindest einer von erstem und zweitem Code (50, 150) in eine regelmässige gedachte Anordnung von Codefeldern (61, 62, 63, 64) unterteilt ist, welche zumindest paarweise zu Codegruppen (60) zusammengefasst sind, wobei nur ein einziges Codefeld (61, 62, 63, 64) innerhalb einer Codegruppe (60) mit einem Codeelement (52, 53, 52') versehen ist.

13. Kapsel nach Anspruch 12, wobei die lokale Position eines Codeelements (52, 53) innerhalb der Codegruppe (60) eine Information enthält.

14. System zum Zubereiten eines Getränkes aus einer Kapsel (10) nach einem der vorhergehenden Ansprüche, umfassend eine Kapsel (10) gemäss einem der vorstehenden Ansprüche und eine Brühmaschine (20) mit einer Brühkammer (26) und einer optischen Detektionseinheit (24) zum Auslesen des Codes (50, 150) auf dem Boden (12) des Kapselbechers (11) während die Kapsel (10) sich in einer Leseposition (L) oberhalb der Brühkammer (26) befindet, wobei vier verschiedene Ausrichtungen der Kapsel (10) in der Leseposition (L) möglich sind, und die Detektionseinheit (24) derart ausgebildet dass sie die ersten Codeelemente (52) des ersten Codes (50) unabhängig von den zweiten Codeelementen (52') des zweiten Codes (150) erkennt und unabhängig voneinander decodiert oder auswertet.

15. Verfahren zum Identifizieren einer Kapsel (10) nach einem der vorhergehenden Ansprüche 1 bis 13 in einer Brühmaschine (20) zum Zubereiten eines Getränks, mit den Schritten:
- Übergeben der von einem Benutzer in die Brühmaschine (20) eingelegten Kapsel (10 in eine Leseposition (L),
- Erkennung von ersten Codeelementen (52) eines ersten Codes (50) und Erkennung von zweiten Codeelementen (52') eines zweiten Codes (150),
- separate Decodierung erster und zweiter Codes (50, 150) zur Identifikation des Kapseltyps anhand der in zumindest einer von erstem und zweitem Code (50, 150) enthaltenen Informationen.
